# NEUE EUROPÄISCHE PATENTSCHRIFT

(11) **EP 0 544 855 B2**
(45) Veröffentlichungstag und Bekanntmachung des Hinweises auf die Entscheidung über den Einspruch: **14.07.1999**
(45) Hinweis auf die Patenterteilung: 29.05.1996
(21) Anmeldenummer: 92910729.0
(22) Anmeldetag: 10.06.1992
(51) Int. Cl.: F02C 7/24, F01D 25/24

(54) **ISOLIERUNG VON THERMISCHEN MASCHINEN**
THERMAL MACHINE INSULATION
ISOLATION DE MACHINES THERMIQUES

(30) Priorität: 25.06.1991 DE 4121340
(43) Veröffentlichungstag der Anmeldung: 09.06.1993
(73) Patentinhaber: ISOLFEU - ISOLFLEX AG, 8330 Pfäffikon (CH)
(72) Erfinder: WIRTH, Anton, CH-8483 Kollbrunn (CH)
(74) Vertreter: Troesch Scheidegger Werner AG
(86) Internationale Anmeldenummer: CH9200110
(87) Internationale Veröffentlichungsnummer: WO9300506

(56) Entgegenhaltungen:
- EP-A- 0 061 656
- DE-A- 3 411 924
- DE-A- 3 446 649
- DE-U- 8 630 251
- GB-A- 736 267
- US-A- 2 737 697
- US-A- 2 960 196
- US-A- 3 677 870

## Beschreibung

Die vorliegende Erfindung betrifft eine thermische Isolierungsschicht für körperartige Bauteile, wie beispielsweise Maschinen, Apparate, Behälter, Geräte, Gas- und Dampfturbinen und dgl., umfassend mehrere aussen am Bauteil aneinander stossend angeordnete, flächig ausgebildete Elemente, resp. Matten oder Kissen.

Im speziellen umfasst die Erfindung thermische Isolierungen für thermische Maschinen, wie beispielsweise Gasturbinen und Dampfturbinen, welche im Falle der Inspektion und Revision derartiger Maschinen leicht entfernt und wieder montiert werden können.

Die Isolierung thermischer Maschinen hat die Aufgabe, den Wärmeverlust durch Abstrahlung und Konvektion von den heissen Maschinenteilen zu reduzieren und gleichzeitig einen Berührungsschutz zu gewährleisten. Entscheidend für die Qualität einer Isolierung im thermischen Maschinenbau ist ein hoher Wärmewiderstand, vor allem aber ein über die ganze zu isolierende Oberfäche möglichst konstanter Wert des Wärmewiderstandes. Unterschiedliche Wärmewiderstände entlang des Maschinenkörpers führen zwangsläufig zu unterschiedlicher Temperaturverteilung. Letztere verursacht Wärmespannungen oder thermische Deformationen des Maschinen körpers, welche insbesondere bei rotierenden, thermischen Maschinen wegen den geringen Masstoleranzen zu schweren Schäden oder sogar zu Totalhavarien führen können.

Eine Besonderheit bei thermischen Maschinenkörpern besteht in der komplizierten, räumlichen Geometrie der Oberfläche. Die Turbinen beispielsweise sind Gusskörper mit einer in unterschiedlichen Ebenen und mit verschiedenen Radien räumlich gekrümmten Oberflächen. Hinzu kommen zahlreiche Stutzen und Abgänge, welche die solchermasse gekrümmte Oberfläche durchdringen.

Jede thermische Maschine benötigt in definierten Zeitintervallen Revisionen oder Inspektionen, bei denen das Gehäuse geöffnet wird. Dabei muss die thermische Isolierung mindestens partiell entfernt und wieder montiert werden.

Die bekannten Isoliersysteme weisen verschiedene Nachteile auf. Eine vor allem in den Anfangszeiten der thermischen Maschinen verwendete Methode ist der Hartmantel. Eine isolierende Masse bzw. Fasermaterial mit Bindemittel, wird im Nasszustand aufgespritzt oder gespachtelt und bildet nach dem Austrocknen eine harte, betonartige Schicht. Diese Methode bewährte sich hauptsächlich in Anbetracht der komplizierten Oberflächengeometrien und sorgte für eine fugenlose Dämmschicht mit konstantem Wärmewiderstand. Nachteilig war jedoch der hohe Aufwand bei Revisionsarbeiten. Die Dämmschicht musste mindestens partiell zerstört und wieder neu erstellt werden. Neben dem hohen Arbeitsaufwand war auch die Staubentwicklung unerwünscht.

Eine andere bekannte Methode zur Isolierung von thermischen Maschinenkörper verwendet eine flexible Isolierung, die demontierbar und auch wieder montierbar ist und die nach dem Prinzip allgemein angewendeter Isolierkissen weich ist. Zur Erzielung einer annähernden Nahtlosigkeit werden die Isolierkissen zweilagig, in versetzter Anordnung angebracht. Innerhalb der jeweiligen Isolierschicht können die einzelnen Isolierkissen überlappend angebracht werden, um Wärmeverluste durch Spaltkonvektion noch besser zu unterbinden. In diesem Falle müssen die Dämmstärken im Ueberlappungsbereich zweier benachbarter Kissen insgesamt konstant bleiben, um den Wärmewiderstand örtlich nicht zu erhöhen. Dies erfolgt bei dieser Methode durch keilförmige, komplementäre Verminderung der Dämmstärke im Ueberlappungsbereich. Nachteilig bei dieser Methode ist der hohe Aufwand bei der Herstellung, bei der die komplizierte Geometrie sowohl bei der inneren wie der äusseren Schicht berücksichtigt werden muss. Die Teile der Innen- und Aussenschicht sind im allgemeinen nicht deckungsgleich, da sich die Krümmungsradien der äusseren Schicht um die Dämmstärke der inneren Schicht vergrössern. Aus den zwei Schichten ergibt sich eine hohe Anzahl von einzelnen Kissen. Neben dem Montage- und Demontageaufwand ist vor alles die Verwechslungsgefahr gefürchtet. Verwechselte Isolierkissen können zu Spalten und Lücken im Dämmsystem führen, und damit zu den folgeschweren Wärmespannungen und Deformstionen im Maschinenkörper.

In der DE-U-8630251 wird eine Isolierung beschrieben, bestehend aus einem Pressformkörper, der mittels einer tiefgezogenen Metallfolienhaut ummantelt ist. Obwohl diese Pressformkörper über eine gewisse Flexibilität verfügen, werden diese Formkörper genau auf die Abmessungen des zu isolierenden Maschinenteils angepasst, womit eine universelle Verwendung dieser Elemente verunmöglicht wird. Auch ist die Flexibilität dieser Pressformelemente limitiert, womit eine Anpassung der vorgeformten Pressformkörper an geometrisch andersartig ausgebildete Oberflächen kaum möglich ist.

Die Aufgabe der vorliegenden Erfindung liegt daher im schaffen einer flexiblen Isolierung für thermische Maschinen, die demontierbar und auch wieder montierbar ist, und die nach dem Prinzip allgemein angewendeter Isolierkissen weich ist, um an die zu isolierende, geometrisch komplizierte Oberfläche angepasst werden zu können. Insbesondere soll sie die Anzahl der Einzelteile reduzieren und trotzdem einen im wesentlichen fugenlosen und nahezu konstanten Wärmewiderstand auf der ganzen Oberfläche gewährleisten.

Erfindungsgemäss wird diese Aufgabe mittels einer thermischen Isolierschicht gemäss dem Wortlaut nach Anspruch 1 gelöst.

Vorgeschlagen wird eine thermische Isolierschicht für die oben erwähnten körperartigen Bauteile, wie Maschinen, Apparate, Geräte, Gas- und Dampfturbinen und dgl., die durch mehrere aussen am Bauteil aneinander stossend angeordnete, flächig ausgebildete matten- oder kissenartige Elemente gebildet wird, wobei die Hülle der Matten oder kissenartigen Elemente aus mechanisch strapazierfähigem und temperaturbeständigem Textilgewebe besteht. Die einzelnen Elemente stossen seitlich mit im wesentlichen senkrecht zur darunter angeordneten Bauteiloberfläche ausgebildeten Stimflächen aneinander, wobei je zwei aneinander stossende Stirnflächen je gegeneinander ausgebildet mindestens eine komplementäre Abstufung aufweisen. Diese Abstufung ist derart, dass die im wesentlichen senkrecht zur Bauteiloberfläche verlaufende Trennfuge zwischen den beiden Elementen eine Abstufung aufweist, und die beiden Elemente mit ihren Stirnflächen entlang dieser Abstufung ineinander greifen, resp. sich gegenseitig je überlappen.

Um die eingangs bei keilförmig komplementär ausgebildeten Ueberlappungsbereichen erwähnten Nachteile, dass bei unterschiedlicher Krümmung der darunter angeordneten Maschinenbauteiloberfläche auszuschalten, ist die Abstufung vorzugsweise im wesentlichen quer resp. rechtwinklig zur Trennfuze, resp. den Stimflächen ausgebildet. Mit anderen Worten verläuft diese Abstufung im wesentlichen parallel zur Oberfläche des zu isolierenden Maschinenbauteils resp. parallel zur Innenhaut des Isolierelementes, welche auf der Oberfläche aufliegt und parallel zur entsprechend gegenüberliegenden Aussenhaut des Isolierelmentes. Somit ist es im wesentlichen zumindest innerhalb gewissen Grenzen unerheblich, welche Konturen resp. Krümmung das zu isolierende Bauteil aufweist, indem die komplementären Abstufungen der beiden Stimflächen im wesentlichen immer aufeinander liegen, so dass die Isolierung im Bereich der Trennfuge im wesentlichen derjenigen im Bereich des Elementes entspricht.

Damit sämtliche Elemente gleichwertig für den Aufbau der Isolierschicht verwendet werden können ist es zudem vorteilhaft, wenn die Abstufung im wesentlichen mittig an der Stirnfläche zwischen der Innen- und der Aussenhaut am Element angeordnet ist. Mit anderen Worten soll die Distanz entlang der Trennfuge von der Bauteiloberfläche bis zur Abstufung im wesentlichen gleich der Distanz sein von der Abstufung bis zur äusseren Oberfläche resp. Aussenhaut des Elementes.

Mit den erfindungsgemäss definierten Elementen für den Aufbau der thermischen Aussenisolation an Bauteilen ist es möglich, eine oder mehrere Isolationsschichten am Bauteil anzubringen. Wesentlich dabei ist, dass die einzelnen Elemente, wie Isoliermatten oder Isolierkissen sich jeweils innerhalb der entsprechenden Schicht entlang der Trennfuge erfindungsgemäss mittels komplementären Abstufungen überlappen. Dabei ist es möglich, dass sich die Elemente mittels einer oder aber mittels mehreren Abstufungen überlappen.

Weitere bevorzugte Ausführungsvarianten der erfindungsgemässen Isolierschicht sind in den Unteransprüchen charakterisiert, wobei die, die Isolierschicht bildenden einzelnen Elemente, wie Isolierkissen und - matten vorzugsweise wieder entfernbar am Bauteil angeordnet werden können.

Für die Befestigung der aneinander stossenden und die Isolierschicht bildenden Elemente eignen sich beispielsweise die bekannten Klettverschlüsse, welche derart angeordnet sind, dass sie die Trennfuge zweier aneinander stossenden Elemente überlappen.

Es ist aber auch möglich, zwei Elemente mittels einer mechanischen Spannvorrichtung, wie beispielsweise einer Feder zwischen zwei je auf einem Element angeordneten Haken zusätzlich aneinander zu halten.

Die Erfindung wird nun anschliessend beispielsweise und unter Bezug auf die beigefügte Figur näher erläutert.

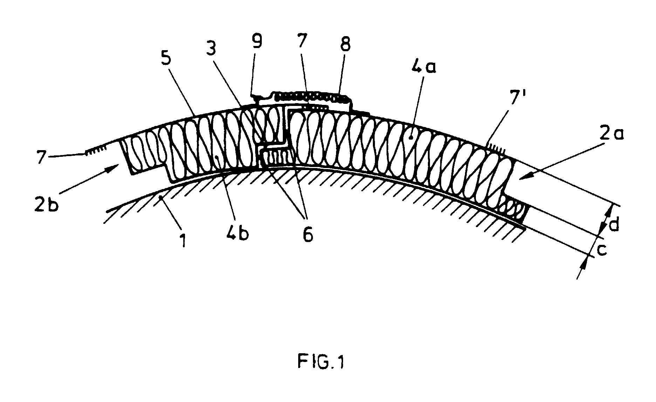

Die beigefügte Figur 1 zeigt dabei im Querschnitt eine auf einem thermischen Maschinenbauteil erfindungsgemäss angeordnete Isolierschicht, wobei zwei aneinander stossende Elemente dieser Isolierschicht dargestellt sind.

In Fig. 1 ist ein Schnitt durch eine an einem Maschinenkörper 1 angebrachte Isolierung dargestellt. Die Isolierung besteht aus einer einzigen Lage von Isolierelementen 4a und 4b, deren Dämmstärke von den Erfordernissen der thermischen Dämmwirkung bestimmt wird. Die einzelnen Elemente oder Kissen 4a und 4b weisen endständig Stirnflächen 2a resp. 2b auf, die im wesentlichen senkrecht zur lokalen Körperoberfläche des darunterliegenden Maschinenkörpers 1 verlaufen.

In einer Krümmung, wie dargestellt in Fig. 1, sind die beiden paarweise gegenüberliegenden Stirnflächen 2a und 2b eines Kissens demzufolge nicht parallel. Das Kissen bildet somit einen der räumlichen Kontur des Maschinenkörpers 1 angepassten, räumlich gekrümmten Körper, bei dem die Aussen- und die Innenhaut nicht deckungsgleich sind.

In Fig. 1 dargestellt sind benachbart ein nach innen abgestuftes Kissen 4b und ein nach aussen abgestuftes Kissen 4a. Die Füllung des Kissens besteht aus einem der Erfordernissen der Dämmung und des aktuellen Temperaturbereiches entsprechenden Dämmstoffes. Hauptsächlich verwendet wird Mineralfaser oder Keramikfaser. Die Kissenhülle besteht, aus mechanisch strapazierfähigem und temperaturbeständigem Textilgewebe. Die einzelnen Teile der Kissenhülle bestehen aus geometrisch zugeschnittenen ebenen Textilgewebestücken, welche an den Bruchkanten mit temperaturbeständigen Glasfaserfäden vernäht sind. Mit Ausnahme der Aussenhaut 5 besteht die Hülle der Kissen 4a und 4b normalerweise aus einem industriellen Glasgewebe, welches beispielsweise mit einem eingewobenen Draht verstärkt ist. Demgegenüber besteht die Aussenhaut 5, beispielsweise aus einem spritzwasserfesten Glasfasergewebe mit aufgedampfter Aluminiumfolie. Diese Angaben sind selbstverständlich nur beispielsweise und die erwähnten Isoliermatten resp. Isolierkissen 4a und 4b können selbstverständlich auf irgendeine andere geeignete Art und Weise ausgebildet werden.

Erfindungswesentlich ist nun, dass sich die Stirnflächen 2a und 2b mittels einer rechtwinklig dazu verlaufenden Abstufung 3 entlang der Trennfuge 6 überlappen. Wesentlich dabei ist, dass die Abstufung 3 wenigstens nahezu parallel zur Oberfläche des Maschinenbauteiles 1 verläuft, so dass in jedem Falle entlang der Abstufung 3 die beiden Kissen 4a und 4b eng aneinander resp. aufeinander liegen. Selbst in dem Falle, wo die Trennfuge in dem Bereich, wo sie senkrecht zur Maschinenbauteiloberfläche verläuft, einen Spalt aufweist, ist trotzdem eine ausreichende Wärmedämmung gewährleistet, da der Spalt durch die Trennfuge 6 niemals durch die ganze Breite der Isolierkissen 4a und 4b verlaufen kann. Damit ist sichergestellt, das selbst im Bereich der Trennfuge 6 die Wärmedämmung mindestens ausreichend ist, im wesentlichen aber nur wenig differiert von der entsprechenden Wärmedämmung im Bereich der einzelnen Isoliermatten 4a und 4b.

Um den vorzugsweise zwischen den beiden Kissen 4a und 4b satt gestossenen Spalt 6 zu überdecken resp. zu verschliessen, wird vorzugsweise ein industrieller Klettverschluss 7 angeordnet. Dies kann beispielsweise dadurch erfolgen, dass wenigstens eines der Kissen 4b von seiner Aussenhaut 5 vorstehend Lappen umfasst, die den Klettverschluss umfassen. Auf dem daran angrenzenden Kissen 4a ist an der Aussenhaut die Aufnahme 7' für den Klettverschluss angeordnet. Durch diesen Klettverschluss wird einerseits eine solide mechanische Verbindung der Kissen untereinander geschaffen, wie auch der Spalt vor eindringendem Spritzwasser geschützt.

Selbstverständlich ist es auch möglich zusätzlich eine mechanische Verbindung mittels einer Feder 8 zu schaffen, welche zwischen aufgenähten Haken 9 zweier benachbarter Kissen gespannt werden kann. Die tangentiale Federspannung erzeugt über dem gewölbtem Maschinenkörper einen Anpressdruck, welcher die Kissen 4a und 4b direkt und gleichmässig gegen die heisse Oberfläche drückt. Für zusätzliche Sicherheit der mechanischen Befestigung können Gurte aus Glasgewebe mit Schnellspannvorrichtung über die Kissenlage gespannt werden.

Beidseitig der beiden dargestellten Kissen 4a und 4b werden selbstverständlich weitere erfindungsgemäss ausgebildete Isoliermatten oder Isolierkissen angeordnet, um das Bauteil 1 zu isolieren. Damit im wesentlichen nur eine Art oder maximal zwei Arten von Kissen für den Aufbau der erfindungsgemässen Isolierschicht benötigt werden, wird vorteilhafterweise die Abstufung 3 an den Stirnflächen 2a resp. 2b mittig zwischen der Aussen- und Innenhaut am Kissen angeordnet. Gemäss Figur 1 heisst das, das die Distanz c gleich der Distanz d ist Auf diese Art und Weise ist es möglich, die Anzahl unterschiedlicher Kissen für die Isolierung von Bauteilen zu reduzieren, die unterschiedliche Krümmungskonturen aufweisen.

Die in bezug auf Fig. 1 beispielsweise beschriebene, erfindungsgemässe Isolierschicht kann selbstverständlich in x-beliebiger Art und Weise modifiziert resp. abgeändert werden. Insbesondere die beispielsweise erwähnte Ausbildung der einzelnen Isoliermatten resp. Isolierkissen kann entsprechend den Anforderungen anders gewählt werden. Die beschriebene Erfindung vereinfacht die Herstellung und die Montage und Demontage einer Aussenisolation an einem Maschinenbauteil. Dank der Reduktion auf eine einzige Isolierschicht oder Isolierlage entsteht der eingangs erwähnte Aufwand für die Herstellung von Ausschnitten und Durchdringungen nur ein einziges Mal, und die Montage- und Demontagezeit der Isolierschicht wird verkürzt. Durch die Geometrie der Kissen ist jedes Teil definiert und lokalisiert. Eine Verwechslungsgefahr besteht nicht. Die thermischen Vorteile einer doppellagigen Isolierung werden dank der Abstufung und des ebenfalls erwähnten Oberflächenlappens, umfassend den Klettverschluss, der Kissen egalisiert. Die Spaltverluste können auf diese Weise unterdrückt werden.

## Patentansprüche

1. Thermische Isolierschicht für körperartige Bauteile (1) wie Maschinen, Apparate, Behälter, Geräte, Gas- und Dampfturbinen und dgl., umfassend mehrere aussen am Bauteil aneinander stossend angeordnete, flächige, matten- oder kissenartige Elemente, wobei die einzelnen Elemente (4) mit seitlich im wesentlichen senkrecht zur darunter angeordneten Bauteiloberfläche ausgebildeten Stirnflächen (2a, 2b) im wesentlichen dicht aneinander stossen, wobei je zwei aneinander stossende Stirnflächen gegeneinander je mindestens eine komplementäre Abstufung (3) aufweisen, so dass die im wesentlichen senkrecht zur Bauteiloberfläche verlaufende Trennfuge (6) zwischen zwei Elementen (4a, 4b) eine Abstufung (3) aufweist und die beiden Elemente mit ihren Stirnflächen (2a, 2b) entlang dieser Abstufung ineinander greifen bzw. einander gegenseitig überlappen, dadurch gekennzeichnet, dass mindestens eines der am Bauteil aneinander stossend angeordneten, flächigen, matten- oder kissenartigen Elemente an zwei gegenüberliegenden Längskanten Stirnflächen (2a, 2b) aufweist, je aufweisend eine Abstufung (3), welche vorgesehen ist, um entlang je der Stirnfläche in eine Stirnfläche eines weiteren Elementes zu greifen, und dass die Hülle der einzelnen Elemente aus mechanisch strapazierfähigem und temperaturbeständigem Textilgewebe besteht.

2. Thermische Isolierschicht nach Anspruch 1, dadurch gekennzeichnet, dass die Füllung des flächigen matten- oder kissenartigen Elementes hauptsächlich aus Mineralfaser oder Keramikfaser besteht.

3. Thermische Isolierschicht nach einem der Ansprüche 1 oder 2, dadurch gekennzeichnet, dass die Hülle des Elementes aus einem industriellen Glasgewebe besteht.

4. Thermische Isolierschicht nach einem der Ansprüche 1 - 3, dadurch gekennzeichnet, dass am Element eine Aussenhaut (5) vorgesehen ist aus einem spritzwasserfesten Glasgewebe mit aufgedampfter Alufolie.

5. Thermische Isolierschicht nach einem der Ansprüche 1 - 4, dadurch gekennzeichnet, dass an einer Trennfuge (6) zweier Elemente (4a, 4b) eine der Stimflächen (2a) in Trennfugenrichtung von Bauteil (1 ) nach aussen verlaufend vom einen Element (4b) nach aussen abgestuft ist, und die andere Stirnfläche (2a) des anderen Elementes (4a) komplementär und wenigstens nahezu, passgenau dazu in das Element (4a) nach innen abgestuft ist.

6. Thermische Isolierschicht nach einem der Ansprüche 1 - 5, dadurch gekennzeichnet, dass die Distanz (c) entlang der Trennfuge (6) von der Bauteiloberfläche bis zur Abstufung (3) im wesentlichen gleich der Distanz (d) von der Abstufung bis zur äusseren Oberfläche (5) der Elemente ist.

7. Thermische Isolierschicht nach einem der Ansprüche 1 - 6, dadurch gekennzeichnet, dass eine oder mehrere aufeinander liegende Schichten von Elementen, wie Isoliermatten oder Isolierkissen, auf dem Bauteil angeordnet sind, wobei sich die Elemente innerhalb der jeweiligen Schicht entlang der komplementären Abstufung oder entlang mehrerer Abstufungen überlappen.

8. Thermische Isolierschicht nach einem der Ansprüche 1 - 7, dadurch gekennzeichnet, dass sie räumlich gekrümmt ausgebildet ist, im wesentlichen angepasst an das darunter liegende, zu isolierende, gekrümmte Maschinenbauteil.

9. Thermische Isolierschicht nach einem der Ansprüche 1 - 8, dadurch gekennzeichnet, dass entlang der Trennfuge zwei aneinander stossende Elemente mittels einem die Trennfuge überlappenden Klettverschluss (7, 7') aneinander gehalten werden.

10. Thermische Isolierschicht nach einem der Ansprüche 1 - 8, dadurch gekennzeichnet, dass zwei aneinander stossende Elemente mittels einer mechanischen Spannvorrichtung, wie beispielsweise einer Feder (8), zwischen zwei je auf einem Element angeordneten Haken (9) aneinander gehalten werden.

## Claims

1. Thermal insulating layer for body-like components (1) such as machines, apparatus, vessels, appliances, gas and steam turbines and the like, comprising several flat mat or cushion-like elements arranged abutting against each other on the outside of the component, wherein the individual elements (4) substantially abut tightly against each other with front faces (2a, 2b) which are lateral and substantially perpendicular to the underlying component surface, wherein two abutting front faces in each case have at least one mutually complementary shoulder (3) so that the parting line (6), running substantially perpendicular to the component surface, between two elements (4a, 4b) has a shoulder (3) and the two elements interlock and/or mutually overlap with their front faces (2a, 2b) along this shoulder, characterized in that at least one of the flat mat or cushion-like elements arranged abutting against each other on the component has, on two opposite longitudinal edges, front faces (2a, 2b), each having a shoulder (3) which is provided in order to engage, along each front face, in a front face of a further element and in that the sheath of the individual elements comprises mechanically durable and temperature-resistant textile fabric.

2. Thermal insulating layer according to Claim 1, characterized in that the filling of the flat mat or cushion-like element chiefly comprises mineral fibre or ceramic fibre.

3. Thermal insulating layer according to one of Claims 1 or 2, characterized in that the sheath of the element comprises an industrial glass fabric.

4. Thermal insulating layer according to one of Claims 1-3, characterized in that an outer skin (5) of a splashproof glass fabric with vacuum-metallized aluminium foil is provided on the element.

5. Thermal insulating layer according to one of Claims 1-4, characterized in that at a parting line (6) between two elements (4a, 4b), one of the front faces (2a) is shouldered outwards in the parting line direction of component (1) running outwards from an element (4b), and the other front face (2a) of the other element (4a) is shouldered inwards in a complementary manner and at least approximately pass-fitting thereto in the element (4a).

6. Thermal insulating layer according to one of Claims 1-5, characterized in that the distance (c) along the parting line (6) from the component surface to the shoulder (3) is substantially equal to the distance (d) from the shoulder to the outer surface (5) of the elements.

7. Thermal insulating layer according to one of Claims 1-6, characterized in that one or more superposed layers of elements, such as insulating mats or insulating cushions, are arranged on the component, wherein the elements within the particular layer overlap along the complementary shoulder or along several shoulders.

8. Thermal insulating layer according to one of Claims 1-7, characterized in that it is designed to be spatially curved, substantially matched to the underlying curved machine component to be insulated.

9. Thermal insulating layer according to one of Claims 1-8, characterized in that along the parting line two abutting elements are held against each other by means of a burr-type fastener (7, 7') overlapping the parting line.

10. Thermal insulating layer according to one of Claims 1-8, characterized in that two abutting elements are held against each other by means of a mechanical clamping device, such as a spring (8), between two hooks (9) arranged on an element in each case.

## Revendications

1. Couche calorifuge pour des pièces en forme de corps (1) comme par exemple des machines, des appareils, des récipients, des mécanismes, des turbines à gaz et à vapeur, etc., comprenant plusieurs éléments en forme de mats ou de coussins à configuration plane qui se touchent, à l'extérieur de la pièce, étant précisé que les éléments individuels (4) se touchent de façon globalement étanche avec des surfaces frontales (2a, 2b) globalement perpendiculaires, latéralement, à la surface de la pièce disposée au-dessous, et étant précisé que deux surfaces frontales qui se touchent présentent au moins un étagement complémentaire (3) l'une par rapport à l'autre, de sorte que le joint (6), globalement perpendiculaire à la surface de la pièce, entre deux éléments (4a, 4b) présente un étagement (3) et que les deux éléments s'emboîtent l'un dans l'autre ou se chevauchent mutuellement avec leurs surfaces frontales (2a, 2b) le long de cet étagement, caractérisée en ce que l'un au moins des éléments en forme de mats ou de coussins à configuration plane qui se touchent, au niveau de la pièce, comporte sur deux bords longitudinaux opposés des surfaces frontales (2a, 2b) présentant chacune un étagement (3) qui est prévu pour s'emboîter le long de la surface frontale dans une surface frontale d'un autre élément, et en ce que la gaine des éléments individuels se compose d'un tissu résistant à l'usure mécanique, et à constance thermique.

2. Couche calorifuge selon la revendication 1, caractérisée en ce que le remplissage de l'élément plan en forme de mat ou de coussin se compose principalement de fibre minérale ou de fibre céramique.

3. Couche calorifuge selon l'une des revendications 1 ou 2, caractérisée en ce que la gaine de l'élément se compose d'une fibre de verre industrielle.

4. Couche calorifuge selon l'une des revendications 1 à 3, caractérisée en ce qu'il est prévu, sur l'élément, une peau extérieure (5) en fibre de verre résistant aux projections d'eau, avec une feuille d'aluminium appliquée par métallisation sous vide.

5. Couche calorifuge selon l'une des revendications 1 à 4, caractérisée en ce que, au niveau d'un joint (6) de deux éléments (4a, 4b), l'une des surfaces frontales (2b) est étagée vers l'extérieur à partir d'un élément (4b), dans le sens du joint et vers l'extérieur à partir de la pièce (1), tandis que l'autre surface frontale (2a) de l'autre élément (4a) est étagée vers l'intérieur de façon complémentaire pour s'emboîter de façon au moins approximativement ajustée dans l'élément (4a).

6. Couche calorifuge selon l'une des revendications 1 à 5, caractérisée en ce que la distance (c), le long du joint (6), entre la surface de la pièce et l'étagement (3) est globalement égale à la distance (d) entre l'étagement et la surface extérieure (5) des éléments.

7. Couche calorifuge selon l'une des revendications 1 à 6, caractérisée en ce qu'une ou plusieurs couches superposées d'éléments tels que des mats ou des coussins isolants sont disposées sur la pièce, les éléments se chevauchant à l'intérieur de la couche le long de l'étagement complémentaire ou le long de plusieurs étagements.

8. Couche calorifuge selon l'une des revendications 1 à 7, caractérisée en ce qu'elle a une configuration courbe dans l'espace, globalement adaptée à la pièce de machine courbe à isoler qui se trouve dessous.

9. Couche calorifuge selon l'une des revendications 1 à 8, caractérisée en ce que le long du joint, deux éléments qui se touchent sont maintenus l'un contre l'autre à l'aide d'une fermeture autoagrippante (7, 7') qui chevauche ledit joint.

10. Couche calorifuge selon l'une des revendications 1 à 8, caractérisée en ce que deux éléments qui se touchent sont maintenus l'un contre l'autre à l'aide d'un dispositif de serrage mécanique comme par exemple un ressort (8) entre deux crochets (9) disposés chacun sur un élément.
